# EUROPEAN PATENT SPECIFICATION

(11) **EP 4 277 203 B1**
(45) Date of publication and mention of the grant of the patent: **20.11.2024**
(21) Application number: 22173316.5
(22) Date of filing: 13.05.2022
(51) Int. Cl.: H04L 9/40, G06F 21/10, H04N 21/00, H04N 21/254, H04N 21/266, H04N 21/4623

(54) **METHOD OF SECURELY STREAMING DIGITAL CONTENT OVER CONTENT DELIVERY NETWORK**
VERFAHREN ZUM SICHEREN STREAMING VON DIGITALEM INHALT ÜBER EIN INHALTSBEREITSTELLUNGSNETZWERK
PROCÉDÉ DE DIFFUSION SÉCURISÉE DE CONTENU NUMÉRIQUE SUR UN RÉSEAU DE DISTRIBUTION DE CONTENU

(43) Date of publication of application: 15.11.2023
(73) Proprietor: Nagravision Sàrl, 1033 Cheseaux-sur-Lausanne (CH)
(72) Inventor: MARIE, Pascal, 1033 Cheseaux-Sur-Lausanne (CH)
(74) Representative: Novagraaf International SA

(56) References cited:
- WO-A1-2022/049601
- US-A1- 2007 174 623
- US-A1- 2019 356 966

## Description

### TECHNICAL FIELD

The present disclosure relates to the field of digital content streaming or distribution over a content delivery network.

### BACKGROUND

The service providers for digital content streaming or distribution have to deal with a number of hacking issues.

One of these hacking issues allows a hacker to provide a pirate service of content streaming based on a DRM key sharing. The hacker subscribes to a content streaming service from a legitimate content provider, as a legitimate user, requests a content and obtains a DRM (digital right management) license for the requested content including a DRM key to decrypt the encrypted content. The hacker uses a weak point of the DRM license to extract the key from it, decrypt and share it with multiple users to allow them to access the content without subscribing to the legitimate content streaming service. A pirate content server gives access to multiple contents to users of the pirate service, by sharing the DRM keys for decrypting the contents. The users of the pirate service set up content streaming sessions with a content delivery network (CDN) of the legitimate content provider, receive encrypted content segments in response to content segment requests, and decrypt them with the DRM key provided by the pirate service portal. The users of the pirate service do not need to subscribe to the legitimate content streaming service and generate an additional network load with the content delivery network.

Patent application WO 2022/049601 A1 discloses a method and system for scaling content entitlement checks for a plurality of subscribers is disclosed. A token embedding information including a token identifier, subscriber metadata and subscription claims is generated subsequent to successful authentication of a subscriber. The token is provided to the electronic device of the subscriber. A request for a playback URL and the token is received from the electronic device in relation to a selection of a content title. A content entitlement check is performed based on the information embedded within the token to determine an eligibility of the subscriber to access content associated with the content title. The playback URL is provided to the electronic device if the subscriber is deemed to be eligible to access the content. The playback URL facilitates display of the content on the electronic device.

Therefore, there is a need for improving the situation. In particular, it is desired to detect and stop an illegitimate network traffic supported by the content delivery network.

### SUMMARY

The present disclosure concerns a method comprising the following steps, performed by a content delivery network:
- receiving a digital content segment request containing a token,
- in response to the digital content segment request, checking the token, and, upon a successful check of the token, transmitting the requested digital content segment to a requestor;
characterized in that the token contains an entitlement tag for restricted use, and the method further comprises the following steps:
- for each of a plurality of received digital content segment requests, extracting the entitlement tag from the token of the digital content segment request and storing a record including at least the extracted entitlement tag;
- analyzing the stored records to detect if the number of instances of a same entitlement tag within a predetermined time period exceeds a threshold;
- in case of a positive detection, storing said entitlement tag in a list of non-trusted tags.

The present method allows to quickly detect a traffic of content segment requests from a pirate service based on key sharing and stop it. Typically, a time period of a few minutes may be sufficient to detect an excessive number of instances or occurrences of the same entitlement tag in a traffic of segment requests received by the content delivery network. Then, the content delivery network can immediately react by stopping delivering the content segments to user devices transmitting segment requests including tokens with the non-trusted tag.

The detection of any non-trusted tag can be performed in real time within the content delivery network, based on the stored records.

Furthermore, the present method does not require any modification of the user devices. No change is required in a player and a DRM content decryption module of the user device to implement the present method.

In an embodiment, the entitlement tag includes at least one of a client identifier, a random number, a counter value.

In case the entitlement tag includes a client (or account) identifier, or a random number or counter value uniquely assigned to a client of a service a digital content streaming or distribution, the detection of a non-trusted tag allows to identify a pirate client among all legitimate clients of the service.

In an embodiment, the method further comprises, upon an unsuccessful check of the token, a step of rejecting the digital content segment request or a step of transmitting a content segment related to a predefined content different from the requested content.

After detection of a non-trusted tag, all the content segment requests containing the same non-trusted tag can be rejected and the traffic related to the illegitimate content segment requests can be stopped. Alternatively, the content delivery network can deliver another pre-defined content, different from the requested content, to the user device. The pre-defined content may contain anti-piracy information and/or information for subscribing to a legitimate service of digital content streaming or distribution.

In an embodiment, the step of checking the token may include :
- verifying a digital signature of said token and/or successfully decrypting said token;
- verifying that the entitlement tag included in the token is not included in the stored list of non-trusted tags;
- verifying that a validity time period of the token has not expired.

In an embodiment, the step of storing a record includes storing, in association with the entitlement tag, additional data including at least one of a content identifier, a network address of a requestor, timestamp data of a reception time of the content segment request.

The additional data in the stored records allow to refine the data analysis of the records.

In an embodiment, the method may further comprises the following steps, performed by a content platform:
- receiving a selection of a digital content from an authenticated requestor;
- in response to said selection, generating the token including the entitlement tag and transmitting the generated token to the authenticated requestor.

In an embodiment, the method may further comprise a step of signing and/or encrypting the generated token, performed by the content platform.

In an embodiment, the method may further comprise the following steps, performed by the content platform:
in response to the selection of the digital content from the authenticated requestor, producing a network address to access the selected digital content, including the generated token in said network address, and transmitting said network address to the requestor.

For example, in response to the selection of the digital content from the authenticated requestor, the content platform generates a network address, such as a web address or URL, to access a playlist file of content segments of the selected digital content, wherein the generated network address includes the generated token, and then transmits said network address to the requestor. The requestor can download the playlist file and then the content segments, using the received network address including the token.

The step of analyzing the stored records may be performed using a machine learning model.

In an embodiment, the method further comprise a step of watermarking at least part of the digital content segments transmitted to the requestor with the respective entitlement tag.

In an embodiment, the steps of storing records and analyzing the stored records are performed by a management system from records stored by a plurality of distributed edge servers of the content delivery network, and the management system transmits a list of non-trusted tags to the distributed edge servers.

The present disclosure also concerns a system including a content delivery network configured to carry out the steps of the method previously defined.

The system may further include a digital content platform configured to carry out the additional steps of
- receiving a selection of a digital content from an authenticated requestor;
- in response to said selection, generating the token including the entitlement tag and transmitting the generated token to the authenticated requestor.

### BRIEF DESCRIPTION OF THE DRAWINGS

Other features, purposes and advantages of the disclosure will become more explicit by means of reading the detailed statement of the nonrestrictive embodiments made with reference to the accompanying drawings.
Figure 1 schematically illustrates a legitimate service of digital content streaming of the prior art and a pirate service of digital content streaming, according to an example.
Figure 2 schematically illustrates a distributed system for digital content streaming or distribution, according to an embodiment.
Figure 3 represents a communication diagram in which successive digital content segments are transmitted to a legitimate user device, according to an embodiment.
Figure 4A-4B represents a communication diagram in which an entitlement tag is over-used by illegitimate users, detected, and black-listed as a non-trusted entitlement tag..
Figure 5 is an illustrative example of a table of use cases for generating input training data for a machine learning model, by simulation.

### DETAILED DESCRIPTION

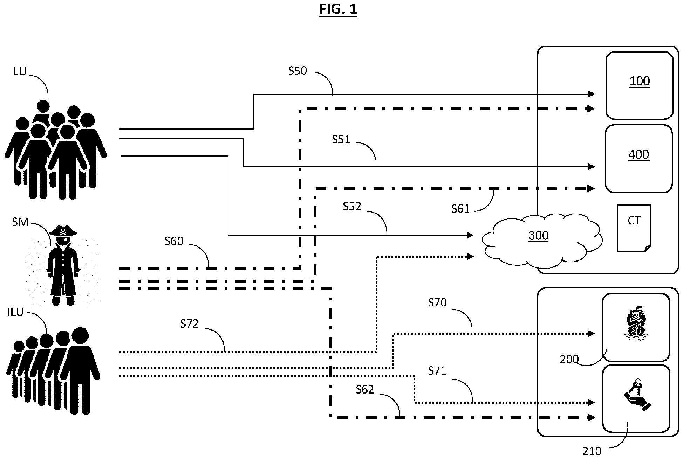

Figure 1 schematically illustrates a legitimate service of digital content streaming of the prior art and a pirate service of digital content streaming, according to an example.

A known legitimate service of digital content streaming of the prior art works as follows:
In a step S50, a legitimate user LU that has subscribed to the legitimate service of digital content streaming, equipped with a user device, authenticates with a legitimate content platform 100, and selects a digital content CT from the legitimate content platform 100. In response, the content platform 100 transmits an URL of a playlist of content segments together with a content related access token for CDN (Content Delivery Network) and a content related authorization token for DRM (Digital Right Management), for the selected content CT, to the authenticated legitimate user LU. The content related access token for CDN includes authorization data for accessing the selected content. The content related authorization token for DRM includes authorization data for obtaining a DRM license for the selected content. In a next step S51, the legitimate user gets a DRM license file including a content key to decrypt the selected content, in exchange from the content related authorization token for DRM, from a DRM license server 400. In step S52, the legitimate user LU transmits requests for segments of the selected content CT to the content delivery network (CDN) 300 together with the content related access token for CDN, based on the received URL. The content delivery network 300 checks the content related access token and, in response, upon a successful check on the content related access token, transmits the requested encrypted content segments of the selected content CT to the legitimate user device LU.

A known pirate service of digital content streaming of the prior art operates as follows:
A strawman SM of the pirate service, equipped with a user device, first subscribes to the legitimate digital content streaming service with the legitimate digital content platform 100. Later, the strawman SM authenticates with the legitimate content platform 100 and selects a digital content CT from the legitimate content platform 100, in a step S60. In response, the content platform 100 transmits an URL of a playlist of content segments, together with a content related access token and an authorization token for DRM for the selected content CT to the strawman SM, seen as an authorized legitimate user by the content platform 100. Then, in a step S61, the strawman SM gets a DRM license file including a content key to decrypt the selected content CT, in exchange from the authorization token for DRM, from the DRM license server 400, and extracts (and decrypts) the content key from the DRM license file using hacking means. In a step S62, the strawman SM feeds a pirate DRM license server 210 with the extracted (decrypted) content key. Later, in a step S70, an illegitimate user ILU, in other words a user of the pirate service, equipped with a user device, authenticates with an illegitimate (pirate) content platform 200 and selects the content CT on the illegitimate content platform 200. Then, in a step S71, the illegitimate user ILU gets a DRM license file including the extracted content key from the illegitimate DRM license server 210 to decrypt the selected content CT. In a step S72, the illegitimate user ILU downloads the content segments of the selected content CT streamed from the content delivery network 300 of the legitimate service, as a legitimate user, and decrypts them with the extracted content key.

The pirate service of digital content streaming, provided by the illegitimate content platform 200, is based on sharing with multiple users ILU content keys illegitimately extracted and/or decrypted from DRM licenses. The illegitimate users ILU of the pirate service do not need to subscribe to the legitimate digital content streaming service with the legitimate platform 100. Furthermore, they cause an additional network load that the content delivery network 300 of the legitimate service has to support.

The present disclosure allows to improve the situation, as explained below.

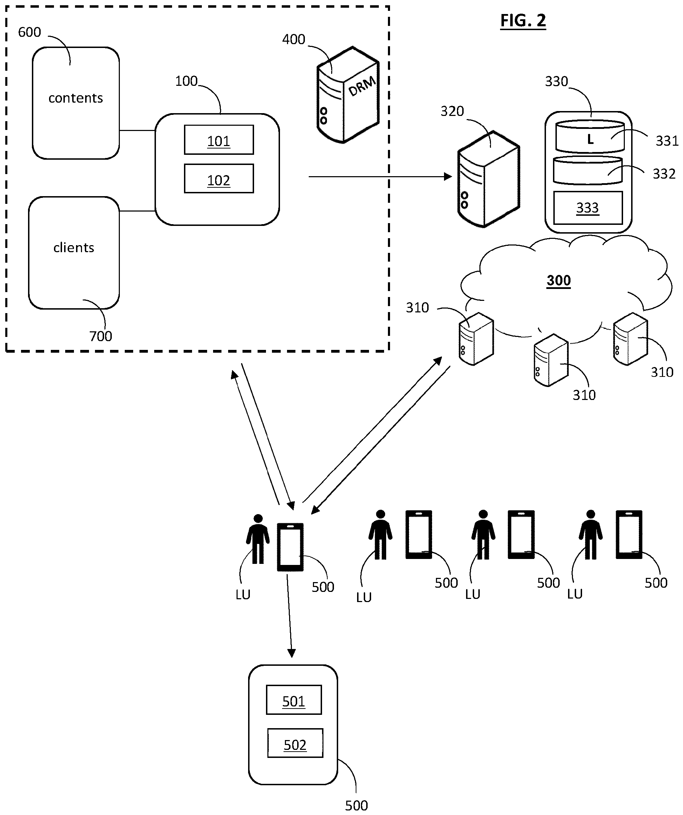

Figure 2 is a schematic view of a distributed system implementing a digital content streaming or distribution service, according to an embodiment.

The distributed system of digital content streaming may comprise a digital content platform 100, a content delivery network or CDN 300, a DRM license server 400, and user devices 500.

A client is a subscriber to the service of digital content streaming or distribution. A client account may be assigned to each client with the digital content streaming service, and include client identification information, and/or client credentials, rights, ... The client may use the service of digital content streaming with one or more user devices. In an embodiment, the client may have the right to simultaneously use the digital content streaming service with a predetermined number of user devices.

The content platform 100 offers digital contents to clients with user devices 500. The digital contents can be videos, audios, text files, software, games, or any other kind of data. The content platform 100 is responsible for authenticating a user device 500, enabling the user device 500 to select a digital content on the content platform 100 and, in response, providing the authenticated user device 500 with a network address to access the selected digital content for distribution over the content delivery network 300, as will be described in more detail later.

Furthermore, in the present disclosure, the content platform 100 is configured to create a restriction token including an entitlement tag for restricted use for entitlement to receive a content and transmit the restriction token to the user device 500.

A token is a structure of data, or a message, that is digitally signed and/or encrypted by the content platform 100.

The restriction token may be transmitted together with the network address to access the selected digital content. It may be included within or added to the network address to access the selected digital content.

In another embodiment, the content platform 100 may be configured to transmit a content related access token for the selected content to the authenticated user device 500, said content related access token including authorization data for accessing the selected content. Then, when delivering the content over the content delivery network 300, the content related access token is transmitted by the user device 500 to the content delivery network 300, and checked by the content delivery network 300, which ensures that the content can only be delivered to a user device authorized to access the content.

In another embodiment, the content platform 100 may be configured to transmit a watermark token for the selected content, the watermark token including a watermark. Then, when delivering the content over the content delivery network 300, the watermark token is transmitted by the user device 500 to the content delivery network 300 and the content delivery network 300 digitally watermarks the content delivered to the user device 500 based on the received watermark token.

The content platform 100 may include a token generator 101 and a network address generator 102. The token generator 101 has the function of creating the restriction token, and optionally any other token, for example in response to the selection of a digital content by an authenticated user device 500. The network address generator 102 has the function of creating a network address to access a selected digital content from the content delivery network 300. A generated token may be added to the network address. The token generator 101 and network address generator 102 may be implemented by pieces of software running on a processing unit (not represented) of the content platform 100.

The content platform 100 may be connected to a content management system 600 and to a client management system 700. The content management system 600 is responsible for storing digital contents and/or receiving digital contents from content sources, encoding the digital contents and encrypting them with content keys. The client management system 700 is also responsible for managing the client subscriptions and for storing information on clients that have subscribed to the content streaming service. The management of clients and contents of a digital content streaming service is well-known and will not be described in more detail.

The DRM license server 400 is configured to distribute DRM licenses for digital contents to authorized user devices 500. A DRM license is a data structure including an encrypted content key for decrypting one or more content(s). The DRM license may include other data, such as usage rules. The DRM license server 400 cooperates with an authorization server that may be the content platform 100. The authorization server, for example the content platform 100, is responsible for executing an authorization process to authorize a user device 500 to receive a DRM license. The authorization process can be the authentication process performed when a user device connects to the content platform 100 and authenticates with the content platform 100 to select a digital content. In case of successful authorization or authentication, the content platform 100 may transmit an authorization token for DRM signed with a key shared by the DRM license server 400 and the content platform 100, to the authorized user device 500. The DRM license server 400 is responsible for transmitting the DRM license to the authorized user device 500, in response to a DRM license request including a valid authorization token for DRM signed by the content platform 100.

The user devices 500 are connected to the content platform 100, the CND edge servers 310 and the DRM license server 400 through a communication network, such as the Internet (not represented in figure 2).

Each user device 500 may include a digital content player 501 and a content decryption module 502, as illustrated at the bottom of figure 2.

The digital content player 501 is configured to :
- authenticate with the content platform 100,
- in case of successful authentication, select a content on the content platform 100, receive an authorization token for DRM to get a DRM license for the selected content, and receive a network address, such as a web address or URL, to access the selected content over the content delivery network 30,
- request, receive, decrypt, decode and play content segments for the selected content.

The digital content player 501 may be implemented with software and hardware.

The Content Decryption Module (CDM) 502 is configured to decrypt encrypted DRM content. It works as a "black box", transmitting a DRM license request including the received authorization token for DRM to the DRM license server 400, receiving in response the requested DRM license including a content key, receiving an encrypted content and returning the decrypted content. It may be implemented with software and hardware.

The content delivery network 300 is responsible for delivering or transmitting digital contents to user devices 500. The digital contents may be received by the content delivery network 300 from the content platform 100. They may be encrypted and segmented into digital content segments. A digital content segment is a digital content file corresponding to a fragment of the content. For each content, the content segments may be received by the content delivery network 300 together with a content playlist file, that will be described later. The content segments and the playlist file may be cached into CDN edge servers 310. In an embodiment, for each content, the content segments may be received by the content delivery network 300 together with the corresponding content related access token and/or authorization data for accessing the content. The content related access token and/or the authorization data for accessing the content may be cached into CDN edge servers 310 together with the content segments. The content delivery network 300 may comprise a plurality of CDN edge servers 310, provided at different locations. In operation, the CDN edge servers 310 may receive content segment requests from user devices 500 and, in response, transmit the requested content segments to the requestor user devices 500.

The content delivery network 300 may also comprise a CDN origin server 320 configured, for each digital content pushed by the content platform 100 to the content delivery network 300, to receive the content segments and the associated playlist and cache them into the each of the plurality of CDN edge servers 310.

In the present disclosure, the content delivery network 300 may further include a CDN management system 330. The CDN management system 330 may comprise a blacklist database 331, a record database 332, and a data analyzer 333. The management system may be external to the content delivery network, as explained later.

The blacklist database 331 is configured to store a list L of non-trusted tags. This list L is accessible from the CDN edge servers 310. In an embodiment, the list L may be cached into the CDN edge servers 310.

The record database 332 is configured to consolidate and store data records, or logs, received from the plurality of CDN edge servers 310, related to a traffic of content segment requests received by the CDN edge servers 310, as explained later in more detail in the description of the method. A log includes a plurality of records stored within a given period of time.

The data analyzer 333 is responsible for analyzing the stored records or logs from the record database 332 to detect any non-trusted tag and, in case of positive detection, storing the detected non-trusted tag in list L stored in the blacklist database 331.

In another embodiment, the record database and the data analyzer may be external to the content delivery network 300. Optionally, the blacklist database may also be external to the content delivery network 300.

In another embodiment, the streaming of contents to user devices 500 may be balanced by the service platform 100 between two or more content delivery networks 300, each content delivery network having respective edge servers 310. In such a configuration, the record database 332 and blacklist database 331 may be either centralized for the different content delivery networks, or there may be a record database 332 and a blacklist database 331 in each content delivery network 300.

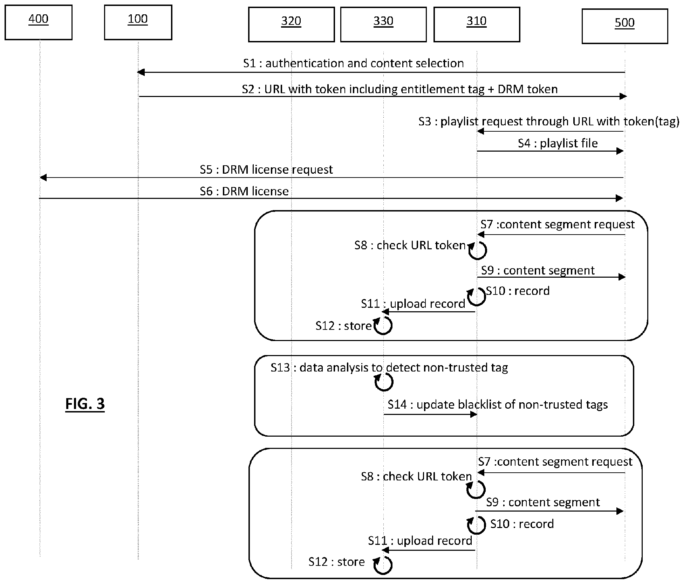

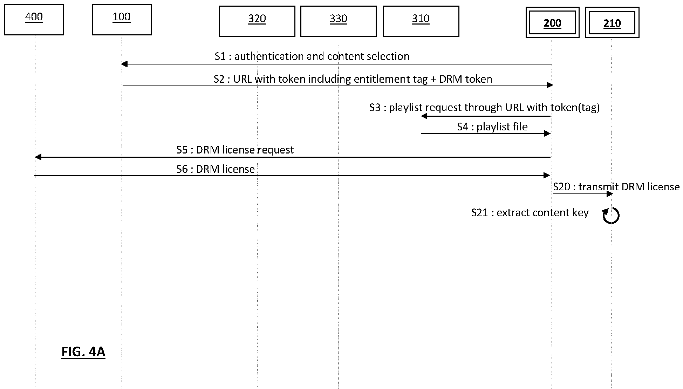

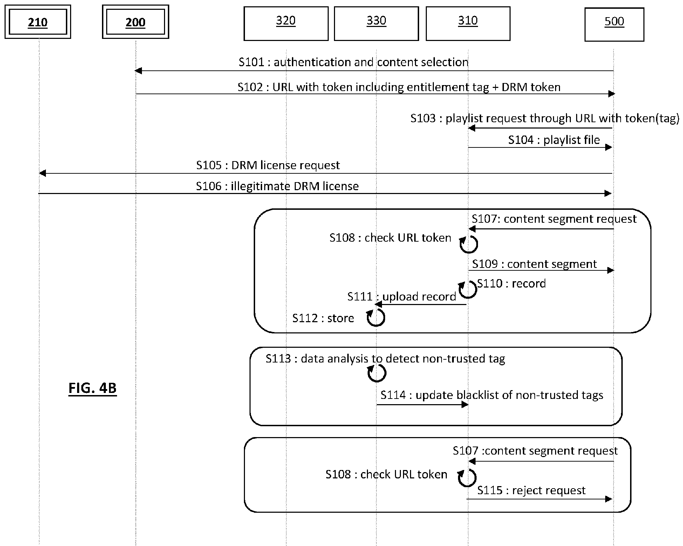

A method of distributing or streaming a digital content to user devices 500 will now be described in reference to figures 3 and 4. In figure 3, the user device 500 is a legitimate user. In figure 4A-4B, the user device 500 is an illegitimate user device 500. In figures 3 and 4, the groups of steps that are recurrently or periodically executed are surrounded by a rectangle.

In a first step S1, a client connects to the content platform 100 with a user device 500, authenticates, for example by transmitting client credentials such as a client identifier and password, and selects or requests a digital content available on the content platform 100 for this client. It is assumed that the user device 500 is authorized to select the digital content.

In case of successful authentication of the user device 500, the content platform 100 transmits a network address to access the selected content to the requestor user device 500, in a step S2. The network address may be a web address, or URL. This network address or URL may specify the location of a playlist file on the content delivery network 300 for the selected content and a mechanism or protocol for retrieving it, for example the protocol http.

In the present disclosure, the content platform 100 generates a restriction token and adds it to the network address to access the selected content, here to the network address or URL of the playlist file, that is transmitted to the user device 500.

The restriction token is a structure of data that is digitally signed and/or encrypted by the content platform 100, and includes an entitlement tag for restricted use.

In a first illustrative example, the received network address is an URL that may have the form: http://mydomain.cdn.net/trestriction _token]/myservice/mycontent/playlist.mpd which indicates in order: a protocol (http), a hostname (mydomain.cdn.net), a service name (myservice), a content name (mycontent) and a file name (playlist.mpd), and includes a token ([restriction_token]) added just after the hostname, before the service name, content name and file name. In this example, the edge server 310 will remove the token from the URL to reach the actual data from the origin server 320.

In a second illustrative example, the received network address is an URL that may have the form: http://mydomain.cdn.net/myservice/mycontent/playlist.mpd?[restriction_token] which indicates in order: a protocol (http), a hostname (mydomain.cdn.net), a service name (myservice), a content name (mycontent) and a file name (playlist.mpd), and includes a token ([restriction_token]) added at the end of the URL as a query parameter.

The digital signature of the restriction token may be computed by the content platform 100 with a private key of the content platform 100, associated with a public key known from the CDN 300, or with a secret key shared by the content platform 100 and the CDN 300.

Alternatively, or additionally, it may be encrypted by the content platform 100 with a private key of the content platform 100, associated with a public key known from the CDN 300, or with a secret key shared by the content platform 100 and the CDN 300.

In an embodiment, the restriction token may include other data, such as a content identifier of the selected content.

A valid restriction token is required to receive the content segments of the selected digital content from the content delivery network 300, as will be described in more detail later.

Optionally, the restriction token may have a given validity time period, which may be predetermined and/or indicated in the restriction token.

The entitlement tag within the restriction token is an indicator for detecting an abusive or excessive use of the restriction token. The entitlement tag is provided by the content platform 100 to the authenticated and authorized user device 500 that has selected a content so as to be entitled to receive the selected content from the content delivery network 300. Thus, it is an indicator for entitlement to receive a selected content over the content delivery network 300. But, the entitlement tag is for restricted use as to the number of device users. Furthermore, it may be unrelated to the selected content. Depending on usage rules, the same entitlement tag may be provided to one or more user devices 500, but in a limited way as to the number of device users 500, and may entitle to download one or more contents over the content delivery network 300. In other words, one entitlement tag may be used to entitle one user device or a limited number of user devices, for example a plurality of user devices associated with a same client account, to receive one or more digital contents. The same entitlement tag might be used to entitle one user device or a limited number of user devices to receive any digital content that can be selected on the content platform. The entitlement tag included in the restriction token has the role of restricting the use of the restriction token as to the number of user devices.

In a first embodiment, the entitlement tag within the restriction token includes a client or account identifier of the client that has selected the content with the user device 500. The client or account identifier is an information identifying the client of the service of digital content streaming. It may be stored in a client database of the client management system 700 within the client account information. If the client has the right to simultaneously share the digital content streaming service with a predetermined maximum number of user devices, the same entitlement tag may be provided to different user devices, within the limit of the maximum number of authorized user devices.

In a second embodiment, the entitlement tag within the token included in the network address to access the selected content may be a random number generated by the content platform 100. In an embodiment, the random number may be generated each time the content platform 100 receives a content request, and may be unrelated to the requestor user device 500. In another embodiment, the random number may be generated uniquely for one user device 500 that has selected a content. It may be stored in association with information identifying the user device 500 and/or a client account in a database associated with the content platform 100, for example the client database.

The random number may be assigned to the user device 500 for one content, or for a limited number of contents, and/or for a limited period of validity.

In a variant of the second embodiment, the random number may be uniquely generated for one client. It may be stored in the client database in association with the client identifier. In that case, if the client has the right to simultaneously use the digital content streaming service with a predetermined maximum number of user devices, the same random number may be transmitted to different user devices, within the limit of the maximum number of authorized user devices.

In a third embodiment based on the second embodiment or the variant of the second embodiment, the random number is replaced by a counter value generated by a counter of the content platform 100.

In another embodiment, in the step S2, the content platform 100 may transmit the network address to access the selected content to the requestor user device 500 (e.g., the URL of the content playlist) together with a content related access token including authorization data for accessing the specific content selected on the content platform 100. The authorization data represents an authorization to access a specific digital content, namely the content selected on the content platform 100. The authorization data is linked to the selected content.

In another embodiment, in the step S2, the content platform 100 may transmit the network address to access the selected content to the requestor user device 500 (e.g., the URL of the content playlist) together with a watermark token containing a watermark for digitally watermarking the selected content when delivering over the content delivery network 300.

In an embodiment, the restriction token may be combined or fused with at least one other token. In other words, one single token may include the data embedded in the restriction token and the data embedded in another token. For example, one single token may comprise a first part including the entitlement tag, and optionally the additional data of the restriction token (validity or expiration time period, content identifier, ...), and at least a second part including authorization data for accessing a specific content and/or a digital watermark. The structure of data, or token, including all the data is digitally signed and/or encrypted by the content platform 100. This token, that will be termed as a restriction token in the following description, may be added to the URL to access the selected content.

In the step S2, upon successful authentication of the user device 500 and authorized selection of the digital content, the content platform 100 may also transmit an authorization token for DRM to the user device 500 for authorizing the user device to get a DRM license file for the selected content, in a well-known manner. The authorization token for DRM may be signed with a key shared by the DRM license server 400 and the content platform 100.

After the step S2, the user device 500 may download first the playlist file through the received URL (or network address), and then a DRM license and a plurality of digital content segments, that are digital content files, as described below in the steps S3 to S7.

In the step S3, the user device 500 may request the playlist file to a CDN edge server 310 through the received URL or network address. The playlist URL includes the restriction token containing the entitlement tag. In response, in a step S4, the user device 500 receives the requested playlist file from the CDN edge server 310.

The playlist file of a content contains information for defining the network addresses (e.g., URLs) of the content segments of the selected content. The segment network addresses (e.g., segment URLs) are relative addresses. They may be built from a root part of the received network address of the playlist file by adding segment identifiers, for example segment indexes or numbers, contained in the playlist file.

The received playlist file may also include a network address, such as an URL, of the DRM license server 400. Thus, after downloading the playlist file, the user device 500 may download a DRM license for the selected content. For that purpose, the content decryption module 502 of the user device 500 may transmit a request for the DRM license for the selected content to the DRM license server 400, in a step S5. The DRM license request may include the authorization token for DRM received from the content platform 100 in the step S2. In response, the content decryption module 502 may receive the requested DRM license from the DRM license server 400, in a step S6. Other embodiments for downloading the DRM license may be performed. The process of downloading a DRM license is well-known by the skilled person and will not be described in more detail in the present disclosure.

After downloading the playlist file and the DRM license for the selected content, the user device 500 downloads a sequence of content segments of the selected content by executing the steps S7 and S9 in an iterative manner, as described below.

For each content segment, the digital content player 501 of the user device 500 transmits a content segment request to the CDN edge server 310, in a step S7. The content segment request contains an URL, or network address, of the requested content segment. This URL may include the restriction token received from the content platform 100 in the step S2. For example, the URL of the requested content segment may be built by assembling a part of the URL received from the content platform, here to download the playlist file, that includes the restriction token, and a content segment index extracted from the playlist file.

In a first example, the URL for downloading a content segment may have the form: http://mydomain.cdn.net/[restriction token]/myservice/mycontent/segment_in dex_i.ext
which indicates in order: a protocol (http), a hostname (mydomain.cdn.net), a service name (myservice), a content name (mycontent) and a file name or the content segment of index i (segment_index_i.ext), and includes the token ([restriction_token]) added between the hostname and the service, content and file names. The token is removed from the URL by the edge server to obtain the actual data from the origin server.

In a second example, the URL of the request for a content segment may have the form:
http://mydomain.cdn.net/myservice/mycontent/ segment_index_i.ext?[restriction_token]
which indicates in order: a protocol (http), a hostname (mydomain.cdn.net), a service name (myservice), a content name (mycontent) and a file name (playlist.mpd), and includes a token ([restriction_token]) added at the end of the URL as a query parameter.

The above URLs of content segments are only illustrative examples and other forms of URLs, or network addresses, could be used.

After receiving the request for the digital content segment from the user device 500, the CDN edge server 310 extracts the restriction token from the received content segment request, and checks the extracted restriction token, in a step S8. In the step S8, the check on the restriction token, generated by the content platform 100 and forwarded by the user device 500, may comprise different verifications.

The CDN edge server 310 may first verify if the restriction token is valid. For that purpose, a first verification can relate to the signature and/or encryption of the restriction token.

In case that the extracted restriction token has been digitally signed by the content platform 100, the first verification of the restriction token comprises verifying the digital signature of the restriction token. For that purpose, the CDN edge server 310 may use the public key of the content platform 100 or the secret key shared by the content platform 100 and the CDN 300, depending in the key used to compute the signature by the content platform 100. If the first verification fails, the CDN edge server 310 determines that the restriction token is not valid.

In case that the restriction token has been encrypted by the content platform 100, the first verification of the restriction token may include decrypting the restriction token with the public key of the content platform 100 or the shared secret key, depending in the key used by the content platform 100 to encrypt the restriction token. The decryption of the restriction token is successful if the outcome of the decryption corresponds to a predefined data structure of restriction token. If the outcome of the decryption does not match the predefined data structure of restriction token, the CDN edge server 310 determines that the restriction token is not valid.

Optionally, a second verification related to the validity of the restriction token is to verify if a validity time period of the restriction token has not expired. The restriction token may include an information related to a validity time period, and the CDN edge server 310 may verify if the restriction token has not already expired based on this information. If the restriction token has expired, the CDN edge server 310 determines that the restriction token is not valid.

If the restriction token is not valid, the CDN edge server 310 may reject the content segment request.

If the restriction token is valid, the CDN edge server 310 may verify if the restriction token is a priori trustworthy. For that purpose, the CDN edge server 310 extracts the entitlement tag from the restriction token and verifies that said entitlement tag whether it is included in the stored list L of non-trusted tags. The list L may be accessible by the CDN edge server 310 from the blacklist database 331 or cached in the CDN edge server 310. If the entitlement tag within the restriction token is included in the stored list L of non-trusted tags, the CDN edge server 310 detects that the entitlement tag is a non-trusted tag, and determines that the restriction token cannot be trusted. In that case, the CDN edge server 310 may reject the content segment request. If the entitlement tag within the restriction token is not included in the predetermined list L of non-trusted tag, the CDN edge server 310 detects that the entitlement tag is a priori a trusted tag, accepts the content segment request, and goes to the step S9.

If the restriction token further includes authorization data for accessing the content specifically selected (as previously described in the case of a fused token), the CDN edge server 310 may first verify the authorization data for example by checking if the authorization data corresponds to reference authorization data received from the content platform 100 for the requested content. In case of successful verification of the authorization data, the access to the requested content may be authorized. In case of failure, the access to the requested content is denied, and the content segment request may be rejected by the CDN edge server 310

In an embodiment, the content segment request is transmitted together with a content related access token including authorization data for accessing the content specifically selected. In that case, the CDN edge server 310 may first check the content related access token to accept or reject the content segment request. The checks on the content related access token may depend on the information included in this token. At least, the CDN edge server 310 checks the signature of the content related access token or decrypts it (in the same manner as described for the restriction token) and verifies the authorization data for example by checking if it corresponds to the reference authorization data received from the content platform 100 for the requested content. In case of successful check of the content related access token, the access to the requested content may be authorized. In case of failure, the access to the requested content is denied, and the content segment request may be rejected by the CDN edge server 310.

If the restriction token is valid, the entitlement tag is not in the list L of non-trusted tags and, optionally, authorization data to access to the selected content has been successfully verified, the method goes to the step S9.

In the step S9, the CDN edge server 310 transmits the requested content segment to the requestor user device 500 through the communication network (e.g., the Internet).

In parallel, in a step S10, upon reception of the digital content segment request, the CDN edge server 310 may store a record including at least the entitlement tag extracted from the received restriction token included within the received content segment request. In some embodiments, the record may include other data, for example:
- a content identifier, identifying the content to which the requested content segment belongs, for example extracted from the restriction token; and/or
- a network address (e.g., an IP address) of the requestor user device 500; and/or
- timestamp data indicating for example a reception time of the content segment request by the CDN edge server 310; and/or
- geo-localization data of the requestor 500 and/or the CDN edge server 310.

The record may be stored in a memory, for example a buffer, of the CDN edge server 310. In a step S11, the record stored by the CDN edge server 310 may be transmitted to the CDN management server 330. The CDN management server 330 may store the received record in the record database 332, in a step S12. Alternatively, the CDN edge server 310 may regularly transmit a log of records to the CDN management server 330, wherein a log includes the plurality of records stored within a given duration or time period, for example ten minutes.

The steps S10 to S12 may be performed for each of all the digital content segment requests received by the CDN edge server 310 from multiple user devices 500 downloading contents from the content delivery network 300. The multiple user devices 500 may be all the user devices 500 downloading contents from content delivery network 300 or only a part of them.

Alternatively, the steps S10 to S12 may be performed for each of a subset of all the digital content segment requests received by the CDN edge server 301 from multiple user devices 500, for example for a given percentage of the content segment requests received by the CDN edge server 310. This allows to reduce the necessary storage resources and the computing efforts of the data analyzer 333, as will be understood later.

The CDN management server 330 may receive and store in the record database 332 the records or logs, related to content segment requests, received from the plurality of CDN edge servers 310 of the content delivery network 300, or from at least a sub-group of all the CDN edge servers 310. Thus, the CDN management server 330 may consolidate records or logs from multiple CDN edge servers 310 in the record database 332.

In a step S13, the CDN management server 330 performs data analysis, for example by performing data analytics, on the data of the stored records to detect if the number of instances or occurrences of a same entitlement tag within a predetermined time period exceeds a certain threshold. In case of positive detection, in other words if the number of instances of the same entitlement tag in the records stored within a predetermined time period exceeds a certain threshold, it is determined that the entitlement tag is a non-trusted tag. Then, the non-trusted entitlement tag is stored by the CDN management device 330, and is added in the list of non-trusted tags in the blacklist database 331.

The data analysis of the stored records may be performed on the entitlement tag data and optionally on other data such as the content identifier data and/or the IP addresses of the user devices. Taking into account other data allows to refine the data analysis and detection of non-trusted tags.

The data analysis may be performed using an analysis algorithm, that can be based on a multi-factor analysis to take into account the entitlement tags together with other parameters such as the content identifiers. Alternatively, the data analysis may be performed using a machine learning model.

The machine learning model for data analysis has the function of classifying the entitlement tags into two categories: trusted tags or non-trusted tags. The trusted tags are entitlement tags used by legitimate user devices. The non-trusted tags are entitlement tags used by illegitimate user devices of the pirate service.

The machine learning model can be trained using simulation data including records and/or logs of data, as previously described, generated based on a simulated CDN traffic of content segment requests received by CDN edge servers from user devices. The simulation of the CDN traffic may use various use cases of the same entitlement tag. The use cases can be divided in two types of use case profiles: the legitimate user profiles and the illegitimate user profiles using the pirate service.

Each use case may be defined by at least part of the following attributes or parameters:
- the indication that one (same) entitlement tag (e.g., one account ID) is used;
- a number of different contents requested using the same entitlement tag (in other words, a number of content identifiers associated with the same entitlement tag);
- a maximum estimated number of segment requests containing the entitlement tag within a predetermined time period (e.g., the time period corresponding to the duration of one log);
- a number of network or IP addresses used by the user device(s) to transmit the content segment requests (optional);
- a restriction token expiration time period (optional);
- the indication that a single restriction token or multiple restriction tokens (with different expiration time periods) are used (optional);
- a proportion of the CDN traffic for the use case;
- a proportion of the CDN traffic per content ID for the use case (optional);
- geo-localization data (optional);
- the indication that the use case is legitimate or illegitimate;
- a description of the use case (optional).

Different simulations may be performed by varying parameters such as the number of different contents requested using the same entitlement tag, the number of network or IP addresses used by the user device(s) to transmit the content segment requests, the proportion of the CDN traffic, etc...

The use case profiles of illegitimate users using the pirate service may include a use case defined by the above parameters, except that it includes the indication that different entitlement tags are used and one content is requested (i.e., one content identifier is associated with the different entitlement tags).

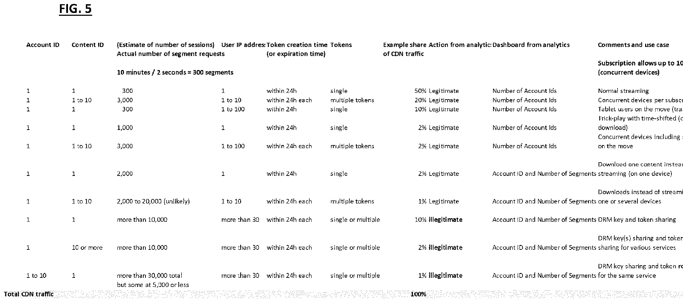

Figure 5 represents a table including an example of different use cases used to simulate a CDN traffic and then produce records and logs of data that will be used as training input data to train the machine learning model. Optionally, the table may further include a column including geo-location information related to the user device, indicating for example a country and a city or area.

In a step S14, the list of non-trusted tags (blacklist) cached in the CDN edge servers 310 may be updated by the CDN management server 330. The update may be performed each time the list of non-trusted tags is modified, for example by addition of a new non-trusted tag, or periodically, for example every day.

When delivering the selected content to the user device 500, the steps S7 to S9, and optionally the steps S10-S12, are executed in an iterative manner as long as the checks on the restriction tokens extracted from the content segment requests are successful, as shown in figure 3. However, it the entitlement tag contained in the restriction token is detected as non-trusted in the step S13, the non-trusted tag is added in the blacklist database 332. After adding the new non-trusted tag in the list L of non-trusted tags accessible by the CDN edge servers 310, each next content segment request received by any CDN edge server 310 from any user device 500 may be rejected, after checking the restriction token extracted from the content segment request in the step S8. More precisely, the verification if the restriction token is a priori trustworthy fails, and consequently the CDN edge server 310 may reject any further content segment request including the non-trusted tag.

Figure 4A-4B is a communication diagram representing the illegitimate (pirate) content platform 200 and the illegitimate (pirate) DRM license server 210.

As shown in figure 4A, in order to distribute a given digital content, the pirate content platform 200, or a strawman of the pirate content platform 200 equipped with a user device, executes the steps S1 to S6, previously described, as a legitimate user device, by selecting the given content. Then, in a step S20, the pirate content platform 200 transmits the received DRM license for the selected content to the pirate DRM license server 210. In a step S21, the pirate DRM license server 210 extracts and decrypts the content key from the DRM license.

Later, when user devices 500 want to download the given content through the pirate content platform 200, each one of them executes the steps S101 to S107 and S109 that are respectively similar to the steps S1 to S6 and S9, except that the content platform is the illegitimate content platform 200 and the DRM license server is the illegitimate DRM license server 210. Each CDN edge server 310 executes the steps S108, S110, S111, that are identical to steps S8, S10 and S11, and the CDN management system 330 executes the steps S112, S113, S114 that are identical to steps S12, S13, S14. After a while, as many user devices 500 used the same entitlement tag included in the URL received in the step 102 to request content segments, the CDN management system 330 detects that this entitlement tag is non-trusted in the step S113, and the list L of non-trusted tags is updated and cached in the CDN edge servers 310. After updating the list L with the new non-trusted tag, any further segment request for the considered content from a user device transmitted to a CDN edge server 310 in the step S107 may be rejected in the step S115, because the CDN edge server 310 detects in the step S108 that the entitlement tag included in the restriction token is included in the updated list L of non-trusted tag. The CDN management system 300 may quickly detect that the entitlement tag is non-trusted in case many user devices request the content at the same time, typically within a few minutes. Thus, the illegitimate traffic of content segment requests can be quickly interrupted.

In an embodiment, in case of detection that the entitlement tag is non-trusted in the step S8 or S108 of checking the restriction token, the CDN edge server 310 may transmit a pre-defined digital content, different from the requested digital content. For example, in response to each of the content segment requests from the user device 500, the CDN edge server 310 may transmit content segments related to the pre-defined content. Thus, the user device 500 is redirected to the pre-defined digital content. For example, the pre-defined content may contain anti-piracy information and/or information for subscribing to the legitimate service of digital content streaming with the legitimate content platform 100.

Let's consider an illustrative example of detection of a non-trusted tag. In this example, upon selection of a content by any user device 500, the content platform 100 transmits an URL of the playlist file for the selected content, including a restriction token containing the client identifier of the user device 500 as an entitlement tag, to the user device. Then, each user device 500 downloads the playlist of the selected content through the received URL, and then the content segments by periodically transmitting a content segment request to a CDN edge server 310, for example every two seconds. Thus, when downloading a digital content, each user device 500 transmits around 30 content segment requests per minute. The CDN edge servers 310 store records related to the received segment content requests. The CDN management server 330 receives and consolidates the records from the multiple CDN edge servers 310 and stores them in the record database 332. The records stored within each of successive time periods of a predetermined duration, for example ten minutes, form a log. The CDN management server 330 performs data analysis on each log. In the present illustrative example, it is estimated that each user device 500 should transmit around 300 content segment requests within each time period (here ten minutes). Furthermore, if some clients have the right to simultaneously share the digital content streaming service with a predetermined number N of user devices, multiple user devices corresponding to the same client may transmit a maximum of Nx300 content segment requests within each time period. Therefore, it is estimated that each log stored in the record database 332 should contain a maximum of Nx300 instances of the same entitlement tag (e.g., client identifier). The number N is generally less than 10.

In case that a pirate has illegitimately distributed the URL of the content playlist file, including a restriction token and, within the restriction token, an entitlement tag (e.g., the client identifier used by the pirate), to multiple illegitimate user devices, together with the content key to decrypt a content, extracted from the DRM license, the number of instances of this entitlement tag, shared by all the illegitimate user devices to request the content segments, should be much higher than the maximum of Nx300 instances of the same entitlement tag estimated for a legitimate client. For example, if the pirate distributed the URL of the playlist file together with the content key to 10 000 illegitimate users, the number of instances of the same entitlement tag should be around 300 000, which is much more than Nx300, even when N is equal to 10.

As previously indicated, the storage and analysis of the content segment request related records received from one or more CDN edge servers 310 may be performed by a storing and computing system external to the content delivery network 300. In that case, the external system may only transmit to the content delivery network the list of non-trusted tags, and update it when needed.

In case that the non-trusted tag includes a client identifier, or a random number or counter value uniquely assigned to a client, the subscription or client account used by the pirate can be identified and denied. The content platform 100 can be informed and block the client account of the pirate.

In an embodiment, the CDN edge server 310 may watermark the encrypted digital content segments transmitted to each user device using the entitlement tag as the watermark. For example, the CDN edge server 310 may use the method for providing encrypted copies of the content segments disclosed in US 7,058,809 B2. In this way, the encrypted content segments have a unique combination of sections marked with a first watermark and sections marked with a second watermark, wherein the unique combination corresponds to the entitlement tag (e.g., user identifier, random number, or counter value). The watermarking allows to defend against content sharing.

## Claims

1. A method comprising the following steps, performed by a content delivery network (300):
- receiving (S7) a digital content segment request containing a token,
- in response to the digital content segment request, checking (S8) the token, and, upon a successful check of the token, transmitting (S9) the requested digital content segment to a requestor;
**characterized in that** the token contains an entitlement tag for restricted use, and the method further comprises the following steps:
- for each of a plurality of received digital content segment requests, extracting the entitlement tag from the token of the digital content segment request and storing (S10-S12) a record including at least the extracted entitlement tag;
- analyzing (S13) the stored records to detect if the number of instances of a same entitlement tag within a predetermined time period exceeds a threshold;
- in case of a positive detection, storing said entitlement tag in a list of non-trusted tags.

2. The method according to claim 1, wherein the entitlement tag includes at least one of a client identifier, a random number, a counter value.

3. The method according to claim 1 or 2, further comprising, upon an unsuccessful check of the token, a step (S115) of rejecting the digital content segment request or a step of transmitting a content segment related to a predefined content different from the requested content

4. The method according to any of claims 1 to 3, wherein the step (S8) of checking the token includes verifying a digital signature of said token and/or successfully decrypting said token.

5. The method according to any of claims 1 to 4, wherein the step (S8) of checking the token includes verifying that the entitlement tag included in the token is not included in the stored list of non-trusted tags.

6. The method according to any of claims 1 to 5, wherein the step (S8) of checking the token includes verifying that a validity time period of the token has not expired.

7. The method according to any of claims 1 to 6, wherein the step of storing a record includes storing, in association with the entitlement tag, additional data including at least one of a content identifier, a network address of a requestor, timestamp data of a reception time of the content segment request.

8. The method according to any of claims 1 to 7, further comprising the following steps, performed by a content platform (100):
- receiving (S1) a selection of a digital content from an authenticated requestor;
- in response to said selection (S1), generating the token including the entitlement tag and transmitting (S2) the generated token to the authenticated requestor.

9. The method according to claim 8, further comprising a step of signing and/or encrypting the generated token, performed by the content platform (100).

10. The method according to claim 8 or 9, further comprising the following steps, performed by the content platform (100):
in response to the selection of the digital content from the authenticated requestor, producing a network address to access the selected digital content, including the generated token in said network address, and transmitting (S2) said network address to the requestor.

11. The method according to any of claims 1 to 10, wherein the step (S13) of analyzing the stored records is performed using a machine learning model.

12. The method according to any of claims 1 to 11, further comprising a step of watermarking at least part of the digital content segments transmitted to the requestor with the respective entitlement tag.

13. The method according to any of claims 1 to 12, wherein the steps (S13, S13) of storing records and analyzing the stored records are performed by a management system (330) from records stored by a plurality of distributed edge servers (310) of the content delivery network (300), and the management system (330) transmits a list of non-trusted tags to the distributed edge servers (310).

14. A system including a content delivery network (300) configured to carry out the steps of the method according to claim 1.

15. The system according to claim 14, further including a digital content platform configured to carry out the additional steps of claim 8.

## Patentansprüche

1. Verfahren, das die folgenden Schritte umfasst, die von einem Inhaltsübergabenetzwerk (300) durchgeführt werden:
- Empfangen (S7) einer digitalen Inhaltssegmentanforderung, die ein Token enthält,
- in Reaktion auf die digitale Inhaltssegmentanforderung Prüfen (S8) des Tokens und nach einer erfolgreichen Prüfung des Tokens Übertragen (S9) des angeforderten digitalen Inhaltssegments zu einem Anforderer;
**dadurch gekennzeichnet, dass** das Token ein Berechtigungstag zur eingeschränkten Verwendung enthält und das Verfahren ferner die folgenden Schritte umfasst:
- für jede einer Vielzahl von empfangenen digitalen Inhaltssegmentanforderungen Extrahieren des Berechtigungstags aus dem Token der digitalen Inhaltssegmentanforderung und Speichern (S10-S12) eines Datensatzes, der mindestens das extrahierte Berechtigungstag beinhaltet;
- Analysieren (S13) der gespeicherten Datensätze, um zu detektieren, ob die Anzahl von Instanzen eines selben Berechtigungstags in einer vorbestimmten Zeitperiode einen Schwellwert überschreitet;
- im Fall einer positiven Detektion Speichern des Berechtigungstags in einer Liste von nicht vertrauenswürdigen Tags.

2. Verfahren nach Anspruch 1, wobei das Berechtigungstag mindestens eines von einer Clientkennung, einer Zufallszahl und einem Zählerwert beinhaltet.

3. Verfahren nach Anspruch 1 oder 2, das nach einer nicht erfolgreichen Prüfung des Tokens ferner einen Schritt (S115) des Zurückweisens der digitalen Inhaltssegmentanforderung oder einen Schritt des Übertragens eines Inhaltssegments, das sich auf einen vordefinierten Inhalt bezieht, der sich vom angeforderten Inhalt unterscheidet, umfasst

4. Verfahren nach einem der Ansprüche 1 bis 3, wobei der Schritt (S8) des Prüfens des Tokens das Verifizieren einer digitalen Signatur des Tokens und/oder des erfolgreichen Entschlüsselns des Tokens beinhaltet.

5. Verfahren nach einem der Ansprüche 1 bis 4, wobei der Schritt (S8) des Prüfens des Tokens das Verifizieren, dass das Berechtigungstag im Token nicht in der gespeicherten Liste von nicht vertrauenswürdigen Tags beinhaltet ist, beinhaltet.

6. Verfahren nach einem der Ansprüche 1 bis 5, wobei der Schritt (S8) des Prüfens des Tokens das Verifizieren, dass eine Gültigkeitszeitperiode des Tokens nicht abgelaufen ist, beinhaltet.

7. Verfahren nach einem der Ansprüche 1 bis 6, wobei der Schritt des Speicherns eines Datensatzes in Verknüpfung mit dem Berechtigungstag das Speichern von zusätzlichen Daten beinhaltet, die mindestens eines von einer Inhaltskennung, einer Netzwerkadresse eines Anforderers, Zeitstempeldaten einer Empfangszeit der Inhaltssegmentanforderung beinhaltet.

8. Verfahren nach einem der Ansprüche 1 bis 7, das ferner die folgenden Schritte umfasst, die von einer Inhaltsplattform (100) durchgeführt werden:
- Empfangen (S1) einer Auswahl eines digitalen Inhalts von einem authentifizierten Anforderer;
- in Reaktion auf die Auswahl (S1) Erzeugen des Tokens, das das Berechtigungstag beinhaltet, und Übertragen (S2) des erzeugten Tokens zum authentifizierten Anforderer.

9. Verfahren nach Anspruch 8, das ferner einen Schritt des Signierens und/oder des Verschlüsselns des erzeugten Tokens umfasst, was von der Inhaltsplattform (100) durchgeführt wird.

10. Verfahren nach Anspruch 8 oder 9, das ferner die folgenden Schritte umfasst, die von der Inhaltsplattform (100) durchgeführt werden:
in Reaktion auf die Auswahl des digitalen Inhalts vom authentifizierten Anforderer Produzieren einer Netzwerkadresse, um auf den ausgewählten digitalen Inhalt, der das erzeugte Token beinhaltet, an der Netzwerkadresse zuzugreifen, und Übertragen (S2) der Netzwerkadresse zum Anforderer.

11. Verfahren nach einem der Ansprüche 1 bis 10, wobei der Schritt (S13) des Analysierens der gespeicherten Datensätze unter Verwendung eines Maschinenlernmodells durchgeführt wird.

12. Verfahren nach einem der Ansprüche 1 bis 11, das ferner einen Schritt des Versehens mindestens eines Teils der digitalen Inhaltssegmente, die zum Anforderer übertragen werden, des jeweiligen Berechtigungstags mit einer Wasserzeichenmarkierung umfasst.

13. Verfahren nach einem der Ansprüche 1 bis 12, wobei die Schritte (S13, S13) des Speicherns von Datensätzen und des Analysierens der gespeicherten Datensätze von einem Verwaltungssystem (330) an Datensätzen durchgeführt werden, die von einer Vielzahl von verteilten Edgeservern (310) des Inhaltsübergabenetzwerks (300) gespeichert wurden, und das Verwaltungssystem (330) eine Liste von nicht vertrauenswürdigen Tags an die verteilten Edgeserver (310) überträgt.

14. System, das ein Inhaltsübergabenetzwerk (300) beinhaltet, das dazu ausgelegt ist, die Schritte des Verfahrens nach Anspruch 1 umzusetzen.

15. System nach Anspruch 14, das ferner eine digitale Inhaltsplattform beinhaltet, die dazu ausgelegt ist, die zusätzlichen Schritte von Anspruch 8 umzusetzen.

## Revendications

1. Procédé comprenant les étapes suivantes, réalisées par un réseau de distribution de contenu (300) :
- recevoir (S7) une demande de segment de contenu numérique contenant un jeton,
- en réponse à la demande de segment de contenu numérique, contrôler (S8) le jeton et, en cas de contrôle réussi du jeton, transmettre (S9) le segment de contenu numérique demandé à un demandeur ;
**caractérisé en ce que** le jeton contient une étiquette de droit à une utilisation restreinte, et le procédé comprend en outre les étapes suivantes :
- pour chacune d'une pluralité de demandes de segment de contenu numérique reçues, extraire l'étiquette de droit du jeton de la demande de segment de contenu numérique et stocker (S10-S12) un enregistrement comportant au moins l'étiquette de droit extraite ;
- analyser (S13) les enregistrements stockés pour détecter si le nombre d'occurrences d'une même étiquette de droit dans une période de temps prédéterminée dépasse un seuil ;
- en cas d'une détection positive, stocker ladite étiquette de droit dans une liste d'étiquettes non fiables.

2. Procédé selon la revendication 1, dans lequel l'étiquette de droit comporte au moins un parmi un identifiant de client, un nombre aléatoire et une valeur de compteur.

3. Procédé selon la revendication 1 ou 2, comprenant en outre, en cas d'échec de contrôle du jeton, une étape (S115) de rejet de la demande de segment de contenu numérique ou une étape de transmission d'un segment de contenu lié à un contenu prédéfini différent du contenu demandé.

4. Procédé selon l'une des revendications 1 à 3, dans lequel l'étape (S8) de contrôle du jeton comporte la vérification d'une signature numérique dudit jeton et/ou le décryptage réussi dudit jeton.

5. Procédé selon l'une des revendications 1 à 4, dans lequel l'étape (S8) de contrôle du jeton comporte la vérification que l'étiquette de droit incluse dans le jeton n'est pas incluse dans la liste stockée d'étiquettes non fiables.

6. Procédé selon l'une des revendications 1 à 5, dans lequel l'étape (S8) de contrôle du jeton comporte la vérification qu'une période de validité du jeton n'a pas expiré.

7. Procédé selon l'une des revendications 1 à 6, dans lequel l'étape du stockage d'un enregistrement comporte le stockage, en association avec l'étiquette de droit, de données supplémentaires comportant au moins un parmi un identifiant de contenu, une adresse réseau d'un demandeur et des données d'horodatage d'une heure de réception de la demande de segment de contenu.

8. Procédé selon l'une des revendications 1 à 7, comprenant en outre les étapes suivantes, réalisées par une plateforme de contenu (100) :
- recevoir (S1) une sélection d'un contenu numérique d'un demandeur authentifié ;
- en réponse à ladite sélection (S1), générer le jeton comportant l'étiquette de droit et transmettre (S2) le jeton généré au demandeur authentifié.

9. Procédé selon la revendication 8, comprenant en outre une étape de signature et/ou de cryptage du jeton généré, réalisée par la plateforme de contenu (100).

10. Procédé selon la revendication 8 ou 9, comprenant en outre les étapes suivantes, réalisées par la plateforme de contenu (100) :
en réponse à la sélection du contenu numérique du demandeur authentifié, produire une adresse réseau pour accéder au contenu numérique sélectionné comportant le jeton généré dans ladite adresse réseau, et transmettre (S2) ladite adresse réseau au demandeur.

11. Procédé selon l'une des revendications 1 à 10, dans lequel l'étape (S13) d'analyse des enregistrements stockés est réalisée à l'aide d'un modèle d'apprentissage machine.

12. Procédé selon l'une des revendications 1 à 11, comprenant en outre une étape de tatouage numérique d'au moins une partie des segments de contenu numérique transmis au demandeur avec l'étiquette de droit respective.

13. Procédé selon l'une des revendications 1 à 12, dans lequel les étapes (S13, S13) de stockage des enregistrements et d'analyse des enregistrements stockés sont réalisées par un système de gestion (330) à partir d'enregistrements stockés par une pluralité de serveurs périphériques distribués (310) du réseau de distribution de contenu (300), et le système de gestion (330) transmet une liste d'étiquettes non fiables aux serveurs périphériques distribués (310).

14. Système comportant un réseau de distribution de contenu (300) configuré pour effectuer les étapes du procédé selon la revendication 1.

15. Système selon la revendication 14, comportant en outre une plateforme de contenu numérique configurée pour effectuer les étapes supplémentaires de la revendication 8.
